# EUROPEAN PATENT SPECIFICATION

(11) **EP 1 199 314 B1**
(45) Date of publication and mention of the grant of the patent: **09.11.2005**
(21) Application number: 00944291.4
(22) Date of filing: 06.07.2000
(51) Int. Cl.: C08F 2/24

(54) **PROCESS FOR PRODUCING AQUEOUS RESIN DISPERSION**
VERFAHREN ZUR HERSTELLUNG EINER WÄSSRIGEN HARZDISPERSION
PROCESSUS DE PRODUCTION D'UNE RESINE DE DISPERSION AQUEUSE

(30) Priority: 12.07.1999 JP 19702899
(43) Date of publication of application: 24.04.2002
(73) Proprietor: Johnson Polymer, Inc., Sturtevant, WI 53177-0902 (US)
(72) Inventor: SANAI, Yasuyuki, Nagoya-shi Aichi 455-0027 (JP); MATSUZAKI, Hideo, Nagoya-shi Aichi 455-0027 (JP); KAAI, Michihiro, Nagoya-shi Aichi 455-0027 (JP); KAYAMORI, Satoshi, Nagoya-shi Aichi 455-0027 (JP)
(74) Representative: Carpmaels & Ransford
(86) International application number: PCT/JP2000/004498
(87) International publication number: WO 2001/004163

(56) References cited:
- JP-A- 6 172 466
- JP-A- 9 003 144

## Description

### TECHNICAL FIELD

The present invention relates to a method for producing an aqueous resin dispersion composition, and more particularly to a method for producing an aqueous resin dispersion composition, which is advantageous in that the emulsion state thereof can be kept stable even when a solvent coexists with the dispersion. The aqueous resin dispersion composition is advantageously used as, for example, paint and adhesive.

### BACKGROUND ART .

For improving the working environment and safety, with respect to paints, coating materials, adhesives, molding materials, medical materials and electronic materials, the trend has been to replace the solvents with water. However, a solvent-free resin product obtained using an aqueous resin dispersion composition produced by emulsion polymerization using an emulsifier has the problem of poor water resistance as compared to solvent-type resin products obtained by polymerization without an emulsifier.

For solving this problem, as a first prior art reference, Japanese Unexamined Patent Publication (Kokai) No. Hei 3-76765 discloses the use of an anionic reactive emulsifier as an emulsifier. This reactive emulsifier is copolymerizable with other monomers. The resultant copolymer unit is incorporated into the intended polymer as a constituting unit. The resin product obtained in this manner has an improved water resistance compared to a resin product obtained using an aqueous resin dispersion composition produced by emulsion polymerization using a low molecular-weight emulsifier.

Conventionally, for improving the quality and performance of a resin product, a solvent has been added to the aqueous resin dispersion composition in accordance with the use. However, the stability of the resin dispersion composition using the reactive emulsifier disclosed in the above prior art document is not satisfactory. For this reason, this resin dispersion composition has a disadvantage in that, when a solvent is added, the resin is likely to suffer aggregation and deposit.

As a second prior art reference, Japanese Unexamined Patent Publication (Kohyo) No..Hei 7-506392 discloses a method in which vinyl monomers are polymerized in an aqueous medium in the presence of a macromonomer having an ethylenically unsaturated bond at one end. The above-mentioned macromonomer is substantially produced using a metal compound composed of cobalt or the like. Therefore, the polymer obtained by the above method contains the metal compound. The metal compound is likely to suffer discoloration, so that there is a need to remove the metal compound from the obtained polymer. The removal step lowers productivity. In addition, the above-mentioned macromonomer serves as a chain transfer agent during the polymerization reaction with vinyl monomers, so that the molecular weight of the resulting polymer is relatively low. For this reason, the uses of the macromonomer and the polymer are limited.

As a third prior art reference, Japanese Unexamined Patent Publication (Kokai) No. Hei 9-3144 discloses a method for producing an aqueous resin dispersion composition, in which a radically polymerizable macromonomer having a neutralized carboxyl group and an ethylenically unsaturated monomer are subjected to emulsion polymerization in an aqueous medium. The above-mentioned macromonomer has a methacryloyl group at an end. When the macromonomer and the ethylenically unsaturated monomer are polymerized therebetween without using an emulsifier, the polymerization stability may be unsatisfied.

As a fourth prior art reference, Japanese Unexamined Patent Publication (Kokai) No. Hei 8-3256 discloses a method for producing an oligomer, which is advantageous as a detergent. This oligomer is substantially produced by high temperature polymerization of acid monomers. In addition, Japanese Unexamined Patent Publication (Kokai) No. 2000-80288 discloses a method for producing an aqueous resin dispersion composition. In the method, emulsion polymerizing is executed in the presence of an oligomer prepared by high-temperature polymerization of acid monomers. Since these oligomers are poor emulsifiers, the uses of these oligomers are limited for emulsifier in emulsion polymerization.

### DISCLOSURE OF THE INVENTION

It is an objective of the present invention to provide a method for producing an aqueous resin dispersion composition, which has the advantage of being stable in a dispersion state.

To attain this objective, the first aspect of the present invention is a method for producing an aqueous resin dispersion composition. The method includes preparing a monomer mixture containing a first monomer having a carboxyl group and a second monomer having a hydrophobic group; subjecting the monomer mixture to radical polymerization at a temperature of from 180 to 350°C to form a macromonomer; neutralizing the macromonomer; and subjecting at least one vinyl monomer to emulsion polymerization in an aqueous solvent using the neutralized macromonomer as an emulsifier. The monomer mixture contains the first monomer in a proportion of 10 to 75% by mole. The neutralized macromonomer has an ethylenically unsaturated bond at least at one end.

Preferably, the emulsion polymerizing includes preparing an aqueous solution of the neutralized macromonomer, and adding at least one vinyl monomer continuously or intermittently to the aqueous solution of the neutralized macromonomer.

Preferably, the emulsion polymerizing includes preparing an dispersion solution including the neutralized macromonomer, at least one vinyl monomer and water, and adding the dispersion solution continuously or intermittently to a reactor vessel charged with water.

Preferably, the emulsion polymerizing includes starting emulsion polymerization reaction by charging the neutralized macromonomer, a vinyl monomer and water to a reactor vessel.

Preferably, the emulsion polymerizing includes preparing a neutralized macromonomer solution, placing water and a part of the neutralized macromonomer solution in a reactor vessel, and adding a vinyl monomer and the rest of the neutralized macromonomer solution continuously or intermittently to the reactor vessel.

Preferably, a base selected from the group consisting of ammonia and a low boiling-point amine compound having a boiling point of 140°C or lower is used in the neutralizing.
Preferably, the neutralized macromonomer has a number average molecular weight of 500 to 5000.

Preferably, the amount of the neutralized macromonomer used in the emulsion polymerizing is 0.5 to 80 parts by weight, per 100 parts by weight of the vinyl monomer.

Preferably, the first monomer is at least one compound selected from the group consisting of acrylic acid, methacrylic acid, crotonic acid, vinylacetic acid, acryloxypropionic acid, maleic acid, fumaric acid, mesaconic acid, citraconic acid, itaconic acid, and maleic anhydride.

Preferably, the second monomer is at least one compound selected from the group consisting of monomers having solubility to water of 2 wt% or less at 20°C.

Preferably, the macromonomer has ethylenically unsaturated bonds at least at two ends.

### BRIEF DESCRIPTION OF THE DRAWINGS

Figure 1 is a graph showing the results of the measurement in Example 16 of the present invention.

Figure 2 is a graph showing the results of the measurement in Comparative Example 16 of the present invention.

### BEST MODE FOR CARRYING OUT THE INVENTION

The present invention will be described below in detail.

### PRODUCTION OF NEUTRALIZED MACROMONOMER

A neutralization product of a macromonomer, which is neutralized with a base, (neutralized macromonomer) used in the present invention has an ethylenically unsaturated bond at end of the macromonomer molecular chain and at least one neutralized carboxyl group bonded to the macromonomer molecular chain.

The neutralized macromonomer is produced by copolymerizing a monomer containing a carboxyl group (carboxyl monomer) and a hydrophobic monomer under the predetermined conditions and neutralizing the resultant copolymer by a base. It is preferred that the number average molecular weight of the neutralized macromonomer is 500 to 5000.

A molecule of the carboxyl monomer has an ethylenically unsaturated bond and a carboxyl group. The carboxyl monomer can be, for example, an unsaturated monobasic acid, such as acrylic acid, methacrylic acid, crotonic acid, vinylacetic acid, acryloxypropionic acid; an unsaturated dibasic acid, such as maleic acid, fumaric acid, mesaconic acid, citraconic acid, itaconic acid; or an unsaturated acid anhydride, such as maleic anhydride. Acrylic acid is particularly preferred since it readily copolymerizes with other various monomers.

In the specification, the term hydrophobic monomer refers to a monomer having solubility in water of 2wt% or less at 20°C. As the hydrophobic monomer, there can be used, for example, a (meth)acrylic acid ester having a C1-C22 alkyl group and an acrylic acid ester having a C2-C22 backbone, such as methylmethacrylate, ethyl (meth)acrylate, propyl (meth)acrylate, butyl (meth)acrylate, 2-ethylhexyl (meth)acrylate, cyclohexyl (meth)acrylate, stearyl (meth)acrylate, lauryl (meth)acrylate, isobornyl (meth)acrylate, perfluoroalkyl (meth)acrylate; vinyl propionate; and styrene. An acrylic acid ester is preferred since it results in macromonomer having a high degree of polymerization can be obtained therefrom.

In addition to the above-mentioned hydrophobic monomers, a hydrophilic monomer can also be copolymerized with a carboxyl monomer as long as the effect of the obtained macromonomer as a surfactant is not impaired. Examples of such hydrophilic monomers include (meth)acrylamide, hydroxyethyl (meth)acrylate, hydroxypropyl (meth)acrylate, allylsulfonic acid, styrenesulfonic acid, vinylsulfonic acid, allylphosphonic acid, vinylphosphonic acid and vinyl acetate.

The amount of the monomer unit having an acryloyl group in the macromonomer is preferably 20% by weight or more, more preferably, 40% by weight or more, and further more preferably, 60% by weight or more, based on the weight of the all of the constituting monomer units.

A macromonomer in which a large proportion of the monomer unit of an acryloyl group in the constituting monomer units has difficulty causing a chain transfer reaction and is likely to undergo copolymerization. That is, macromonomers having a large amount of acryloyl groups are more efficiently copolymerized with a vinyl monomer. Therefore, a copolymer and a graft copolymer having a relatively large molecular weight can be obtained. Such copolymers have excellent water resistance and durability, thus they are advantageous as coating materials and paints.

A macromonomer having ethylenically unsaturated bonds at two ends is particularly preferred. When a macromonomer mixture containing this macromonomer is used in copolymerization of a vinyl monomer, the resulting copolymer has excellent water resistance and durability. Therefore, such a copolymer is advantageous as, for example, coating materials and paints.

The macromonomer is produced by copolymerization between a carboxyl monomer and a hydrophobic monomer in the presence of a radical polymerization initiator at 180 to 350°C. In the copolymerization, a hydrophilic monomer may be added.

The macromonomer is a compound having an ethylenically unsaturated bond at the end, represented by the following formula (1) and having a number average molecular weight of 500 to 5000.

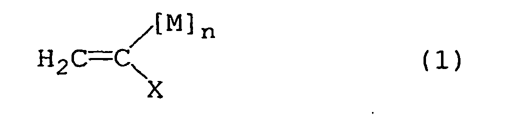

In formula (1), X represents a polar group, such as a COOR group, a phenyl group, a hydroxyalkyl group. R represents a hydrogen atom or an alkyl group. M represents a monomer unit. The character n stands for a natural number representing the degree of polymerization.
The proportion of the carboxyl monomer to the sum of the total monomers subjected to the copolymerization reaction is preferably 10 to 75% by mole, and more preferably, 15 to 60% by mole. When the proportion of the carboxyl monomer is less than 10% by mole, the performance of the obtained neutralized macromonomer as an emulsifier is unsatisfactory. On the other hand, when the proportion of the carboxyl monomer is more than 75% by mole, the performance of the obtained neutralized macromonomer as an emulsifier is also unsatisfactory.

The proportion of the hydrophobic monomer to the sum of the total monomers subjected to the copolymerization reaction is preferably 30 to 95% by weight, and more preferably, 50 to 90% by weight. When the proportion of the hydrophobic monomer is less than 30% by weight, or more than 95% by weight, the performance of the obtained neutralized macromonomer as an emulsifier is unsatisfactory.

As a radical polymerization initiator, a conventionally known initiator is used. The radical polymerization initiator can be for example, hydrogen peroxide, an alkyl hydroperoxide, a dialkyl peroxide, a perester, a percarbonate, a persulfuric acid, a peracid, a ketone peroxide or an azo initiator. A polymerization initiator having a half-life period of 1 to 10 hours at a temperature of from 90 to 100°C is preferred. In addition, a polymerization initiator having a half-life period of 1 to 10 hours at a temperature as low as less than 90°C also can be used.

A more preferable initiator is an aliphatic azo compound, such as 1-t-amylazo-l-cyanocyclohexene, azo-bisisobutyronitrile (AIBN), or 1-t-butylazocyanocyclohexene. Another more preferable initiator is a peroxide or hydroperoxide, such as t-butyl peroctanoate, t-butyl perbenzoate, dicumyl peroxide, di-t-butyl peroxide, t-butyl hydroperoxide, t-amyl hydroperoxide, or cumene hydroperoxide.

It is preferred that the amount of the radical polymerization initiator incorporated is 0.05 to 10% by weight, based on the total weight of the monomers.

In the polymerization reaction, a solvent may or may not be used. When a solvent is used, it is preferred to use a solvent capable of having dissolved therein both of the above-mentioned monomers and the polymer obtained by the polymerization reaction. Further, a solvent having a high boiling point is preferred. For example, an aromatic alcohol, such as benzyl alcohol can be used; or, an aliphatic alcohol, such as isopropanol or butanol can be used; or, an ethylene glycol monoalkyl ether, such as methyl cellosolve or butyl cellosolve can be used; or, a diethylene glycol monoalkyl ether, such as Carbitol can be used; or, an ethylene glycol dialkyl ether, such as ethylene glycol dimethyl ether can be used; or, a diglycol alkyl ether, such as diglycol methyl ether can be used.

Polymerization is conducted in a temperature range from 180 to 350°C. A more preferred temperature range is 270 to 320°C. When polymerization is conducted below 180°C, a large amount of polymer having no ethylenically unsaturated bond at an end is formed, causing the purity of the desired macromonomer to be lowered.

The polymerization reaction is substantially completed within 60 minutes.

By neutralizing the macromonomer produced above by a base, a neutralized macromonomer having an ethylenically unsaturated bond at the end is obtained for use in the present invention.

As a base used in the neutralization of the macromonomer, ammonia, a low boiling-point amine compound, which has a boiling point of 140°C or lower, is preferred. The low boiling-point amine may be, for example, trimethylamine, diethylamine, triethylamine, dimethylethylamine, N-methylmorpholine, t-butanolamine, morpholine or dimethylethanolamine. When the aqueous resin dispersion composition in the present invention, which is produced using a neutralized macromonomer neutralized by the low boiling-point amine, is used as a coating material, the low boiling-point amine readily evaporates after the application of the coating material, and the resulting coating film has excellent water resistance.

The neutralization of the macromonomer by a base may be either partial neutralization or complete neutralization. A preferred neutralization rate is 50 to 100%.

A molecular chain of the neutralized macromonomer has a carboxyl monomer unit, which is hydrophilic, and a hydrophobic monomer unit, which is lipophilic. Therefore, the neutralized macromonomer functions as an emulsifier. Further, since the neutralized macromonomer has an end with an ethylenically unsaturated bond, it can be copolymerized with various monomers.

### Production of aqueous resin dispersion composition

The aqueous resin dispersion composition of the present invention is produced by subjecting a vinyl monomer to emulsion polymerization in an aqueous solvent using the neutralized macromonomer as an emulsifier.

As a vinyl monomer, any vinyl monomer that has been customarily used in an emulsion polymerization can be used. For example, an alkyl (meth)acrylate having a C1-C22 alkyl group, such as methyl (meth)acrylate, ethyl (meth)acrylate, propyl (meth)acrylate, butyl (meth)acrylate, cyclohexyl (meth)acrylate, or octyl (meth)acrylate can be used; or, a hydroxyalkyl (meth)acrylate having a C1-C12 hydroxyalkyl group can be used; or, vinyl acetate, vinyl propionate, butadiene, isoprene, styrene, alkylstyrene, glycidyl (meth)acrylate, N-alkoxymethylacrylamide, or N-methylolacrylamide can be used.

The amount of the macromonomer used is set so that the vinyl monomer can be stably emulsified. Further, the amount of the macromonomer used is appropriately set depending on the use of the aqueous resin dispersion composition.

Generally, 0.5 to 80 parts by weight of the macromonomer per 100 parts by weight of the vinyl monomer are used. When the amount of the macromonomer used is less than the lower limit of the above range, the aqueous resin dispersion composition is not kept in a stable emulsion state. For example, when a solvent is added to such an aqueous resin dispersion composition, the emulsion state is destroyed. On the other hand, when the amount of the macromonomer used is larger than the upper limit of the above range, it is difficult to perform stable polymerization, and further, the water resistance of the product obtained using the resultant aqueous resin dispersion composition is poor.

A preferred amount of the macromonomer used is 0.5 to 40 parts by weight per 100 parts by weight of the vinyl monomer. A more preferred amount of the macromonomer used is 5 to 30 parts by weight per 100 parts by weight of the vinyl monomer. In this case, the aqueous resin dispersion composition is in an extremely stable emulsion state, and, for example, even when an organic solvent in the same volume as that of the aqueous resin dispersion composition is added, the resin component does not suffer aggregation.

A second emulsifier which has been known to those skilled in the art may be used in combination with the above-mentioned macromonomer. In this case, the amount of the second emulsifier used is limited to a range such that the intended effect of the present invention is not impaired. Specifically, it is preferred that the amount of the second emulsifier used is 10% by weight or less, based on the weight of the macromonomer. As the second emulsifier, an anionic surfactant, such as a sodium alkylbenzensulfonate, a sodium polyoxyethylenealkylsulfate, a sodium dialkylsulfosuccinate, or a formalin condensation product of naphthalenesulfonic acid can be used; or, a nonionic surfactant, such as a polyoxyethylene alkylphenyl ether, a polyethylene glycol fatty acid ester, or a sorbitan fatty acid ester can be used.

A known radical polymerization initiator is used in the emulsion polymerization reaction. The polymerization initiator may be either a water-soluble polymerization initiator or an oil-soluble polymerization initiator. For example, an organic peroxide, such as benzoyl peroxide, t-butyl peroxide, dicumyl peroxide can be used; or, an azo compound, such as azobis-(isobutyronitrile), azobis-(2-methylbutyronitrile), or azobiscyanovaleric acid can be used; or, an inorganic peroxide, such as sodium persulfate, potassium persulfate, or ammonium persulfate can be used; or, a redox polymerization initiator comprising the above peroxide and a reducing agent, such as a sulfite can be used.

The amount of the polymerization initiator used is preferably 0.01 to 5% by weight, and more preferably, 0.1 to 3% by weight, based on the total weight of the macromonomer and the vinyl monomer.

The polymerization reaction temperature is preferably 20 to 95°C, and more preferably, 40 to 90°C. The polymerization time is preferably 1 to 10 hours.

The aqueous resin dispersion composition can be used, for example, as a paint, a coating material or an adhesive. In addition, a mixture obtained by mixing other materials with the aqueous resin dispersion composition has other uses.

Due to the above described disadvantages, the aqueous resin dispersion compositions of the prior art materials are limited in use as painting agents, coating materials, and adhesives. The reasons for the disadvantages are presumed to be as follows. For example, in the second prior art material, due to the monomer units constituting the macromonomer substantially contain a methacryloyl group, the macromonomer serves as a chain transfer agent. The poor emulsifying ability of the fourth prior art material resides in that the oligomer has substantially no hydrophobic monomer unit.

Hereinbelow, the present invention will be described in more detail with reference to the following Examples and Comparative Examples. In the following Examples and Comparative Examples, the amounts of the materials used ("part(s)" and "%") are given by weight.

### Examples

### [1] Production of macromonomer

### (1-1) Production of macromonomer BAM6

A pressurizing agitation vessel type reactor equipped with an electrically heating type heater, having a capacity of 300 ml, was filled with ethyl 3-ethoxy-propionate. The internal temperature of the reactor was set at 265°C. The pressure of the reactor was set at the vapor pressure of ethyl 3-ethoxy-propionate or higher using a pressure adjuster. 80 Parts of butylacrylate (BA), 20 parts of acrylic acid (AA) and 0.08 parts of di-t-butyl peroxide were weighed to prepare a monomer mixture liquid, and the prepared monomer mixture liquid was stored in a feedstock tank. While maintaining the internal pressure of the reactor at a constant pressure, the monomer mixture liquid was continuously fed to the reactor from the feedstock tank. In this instance, the feeding speed was set so that the residence time of the monomer mixture liquid in the reactor was 12 minutes. The reaction liquid, in an amount that corresponded to the amount of the monomer mixture liquid being fed, was continuously withdrawn from the outlet of the reactor. During the continuous feeding of the monomer mixture liquid, the internal temperature of the reactor was maintained at 288 to 300°C. After 90 minutes from the start of the feeding, sampling the reaction liquid from the outlet of the reactor was started. The unreacted monomer was removed from the reaction liquid using a thin film evaporator, thereby obtaining macromonomer BAM6. The average molecular weight of the BAM6 was measured by gel permeation chromatography (GPC) using tetrahydrofuran as a solvent. The number average molecular weight (Mn) and the weight average molecular weight (Mw) of BAM6, using a calibration curve obtained by standard polystyrene, were, respectively, 1490 and 3020. Further, using ¹H-NMR, the proportion of the BAM6 having a double end bond (ratio of double end bonds) was measured. It was found that 80% of all of the macromonomer molecules had double end bonds. Further, the acid value of BAM6 was 2.3 meq/g.

### (1-2) Production of neutralization product of BAM6 by ammonia (BAM6-N)

BAM6 and water were placed in a flask. The BAM6 was completely neutralized by an aqueous ammonia, thereby obtaining a pale yellow clear aqueous solution of BAM6-N. The concentration of the solid content was adjusted about 40%. In the neutralizing step, an aqueous ammonia containing ammonia that was equimolar to the acid amount, which was calculated from the amount and the acid value of BAM6, was added to the flask.

### (2-1) Production of macromonomer BAM7

A macromonomer was produced following substantially the same procedure as in (1-1) except that the feedstock of (1-1) was changed to feedstock comprising 65 parts of BA, 35 parts of AA and 0.08 parts of di-t-butyl peroxide. With respect to the obtained macromonomer BAM7, the number average molecular weight Mn was 1560, the weight average molecular weight Mw was 6010, the ratio of double end bonds was 84%, and the acid value was 4.1 meq/g.

### (2-2) Production of neutralization product of BAM7 by ammonia (BAM7-N)

BAM7 was neutralized by ammonia in substantially the same manner as in (1-2) to prepare an aqueous solution of BAM7-N.

### (3-1) Production of macromonomer BAM8

A macromonomer was produced following substantially the same procedure as in (1-1) except that the feedstock of (1-1) was changed to feedstock comprising 88 parts of BA, 12 parts of AA and 0.08 parts of di-t-butyl peroxide. With respect to the obtained macromonomer BAM8, the number average molecular weight Mn was 1410, the weight average molecular weight Mw was 2990, the ratio of double end bonds was 98%, and the acid value was 1.6 meq/g.

### (3-2) Production of neutralization product of BAM8 by ammonia (BAM8-N)

BAM8 was neutralized by ammonia in substantially the same manner as in (1-2), to prepare an aqueous solution of BAM8-N.

### (4-1) Production of macromonomer EAM1

A macromonomer was produced following substantially the same procedure as in (1-1) except that the feedstock of (1-1) was changed to feedstock comprising 80 parts of ethyl acrylate (EA), 20 parts of AA and 0.08 parts of di-t-butyl peroxide. With respect to the obtained macromonomer EAM1, the number average molecular weight Mn was 1310, the weight average molecular weight Mw was 4600, the ratio of the double end bonds was 83%, and the acid value was 2.6 meq/g.

### (4-2) Production of neutralization product of EAM1 by ammonia (EAM1-N)

EAM1 was neutralized by ammonia in substantially the same manner as in (1-2) to prepare an aqueous solution of EAM1-N.

### (5-1) Production of macromonomer CHAM5

A macromonomer was produced following substantially the same procedure as in (1-1) except that the feedstock of (1-1) was changed to feedstock comprising 80 parts of cyclohexylacrylate (CHA), 20 parts of AA and 0.03 parts of di-t-butyl peroxide. With respect to the obtained macromonomer CHAM5, the number average molecular weight Mn was 1440, the weight average molecular weight Mw was 2690, and the ratio of double end bonds was 60%, and the acid value was 3.7 meq/g.

### (5-2) Production of neutralization product of CHAM5 by ammonia (CHAM5-N)

CHAM5 was neutralized by ammonia in substantially the same manner as in (1-2) to prepare an aqueous solution of CHAM5-N.

### Comparative Examples

### (6-1) Production of macromonomer AAM1

A macromonomer was produced following substantially the same procedure as in (1-1) except that a reactor was filled with water instead of ethyl 3-ethoxy-propionate, and that the feedstock of (1-1) was changed to feedstock comprising 30 parts of AA, 0.1 parts of hydrogen peroxide and 70 parts of water. With respect to the obtained macromonomer AAM1, Mn was 1330, Mw was 2480, the ratio of double end bonds was 72%, and the acid value was 12.5 meq/g. As is apparent from the types of the monomers in the feedstock, macromonomer AAM1 has no hydrophobic group.

### (6-2) Production of neutralization product of AAM1 by ammonia (AAM1-N)

AAM1 was neutralized by ammonia in substantially the same manner as in (1-2) to prepare an aqueous solution of AAM1-N.

### (7-1) Production of nonreactive oligomer BAO4

In a flask equipped with a stirrer, a cooling tube and a thermometer, 134 parts of methyl ethyl ketone and 0.8 parts of mercaptoethanol were mixed together. While blowing nitrogen gas into this flask, the flask was heated to 78°C by a water bath. While maintaining the temperature at 78°C, 1.6 parts of AIBN, as an initiator, was added. Then, a monomer mixture liquid comprising 79.4 parts of BA, 16.6 parts of AA and 1.6 parts of AIBN and a chain transfer agent solution comprising 10 parts of methylethylketone and 3.2 parts of mercaptoethanol were added dropwise to the flask over 3 hours, thereby effecting a polymerization reaction. After completion of the dropwise process, 0.8 parts of AIBN were added and the resultant mixture was allowed to stand at 80°C for 4 hours. MEK was removed from the reaction solution under a reduced pressure. Then, a volatile component including the unreacted monomer or the like was removed using a thin film evaporator, thereby obtaining a nonreactive oligomer BA04. With respect to BAO4, Mn was 1530, Mw was 3330, the ratio of the double end bonds was 0%, and the acid value.was 2.1 meq/g. As is apparent from the ratio of double end bonds, BAO4 has no reactive unsaturated bond at the end thereof.

### (7-2) Production of neutralization product of BAO4 by ammonia (BAO4-N)

BAO4 was neutralized by ammonia in substantially the same manner as in (1-2) to prepare an aqueous solution of BA04-N.

### (8-1) Production of nonreactive oligomer BAO5

BAO5 was produced following substantially the same procedure as in (7-1) except that the amount of mercaptoethanol charged in the reactor was changed to 1.2 parts and that the amount of mercaptoethanol fed dropwose to the reactor was changed to 4.8 parts. With respect to BAO5, Mn was 1300, Mw was 2290, the ratio of the double end bonds was 0%, and the acid value was 2.2 meq/g. As is apparent from the ratio of the double end bonds, BAO5 has no reactive unsaturated bond at the end thereof.

### (8-2) Production of neutralization product of BAO5 by ammonia (BAO5-N)

BAO5 was neutralized by ammonia in substantially the same manner as in (1-2) to prepare an aqueous solution of BA05-N.

### (9-1) Production of nonreactive oligomer BAO8

BAO8 was produced following substantially the same procedure as in (7-1) except that the monomers in the reactor was changed to 65 parts of BA and 35 parts of AA, and that octylthioglycolate was used for mercaptoethanol and that the amount of octylthioglycolate charged in the reactor was 2.0 parts and the amount of octylthioglycolate fed dropwose to the reactor was 5.0 parts. With respect to the obtained BAO8, Mn was 2500, Mw was 5060, the ratio of the double end bonds was 0%, and the acid value was 4.3 meq/g. As is apparent from the ratio of double end bonds, BAO8 has no reactive unsaturated bond at the end thereof.

### (9-2) Production of neutralization product of BAO8 by ammonia (BA08-N)

BAO8 was neutralized by ammonia in substantially the same manner as in (1-2) to prepare an aqueous solution of BA08-N.

### (10-1) Production of nonreactive oligomer CHAO1

CHAO1 was produced following substantially the same procedure as in (7-1) except that the monomers in the reactor was changed to 77 parts of CHA and 23 parts of AA. With respect to the obtained CHAO1, Mn was 2070, Mw was 3540, the ratio of double end bonds was 0%, and the acid value was 3.10 meq/g. As is apparent from the ratio of double end bonds, CHAO1 has no reactive unsaturated bond at the end thereof. CHAO1 is different from CHAM5 only in this point.

### (10-2) Production of neutralization product of CHAO1 by ammonia (CHAO1-N)

CHAO1 was neutralized by ammonia in substantially the same manner as in (1-2) to prepare an aqueous solution of CHAO1-N.

### [2] Production of aqueous resin dispersion composition Example 1

As an emulsifier, BAM6-N was used. An aqueous solution of BAM6-N such that the amount of BAM6 was 1.25g, 200g of styrene, and water were weighed and placed in a flask. While heating the flask by a water bath, the raw materials were stirred and mixed with each.other. The water was weighed so that the sum of the moisture component of the aqueous solution of BAM6-N and the weighed water was 1 liter. Accordingly, the concentration of BAM6 was 1.25g per 1 liter of water or 1.25g/l-water. After the temperature of the mixture liquid became stable at 50°C, 1.25g of potassium persulfate was added. While adjusting the temperature of the mixture liquid at 50°C ± 2°C, a polymerization reaction was conducted for 4 hours. The polymerization reaction proceeded smoothly. A uniform aqueous resin dispersion composition containing no aggregate was obtained.

### Example 2

As an emulsifier, BAM7-N was used. Substantially the same procedure as in Example 1 was performed except that the aqueous solution of BAM6-N was replaced by an aqueous solution of BAM7-N such that the amount of BAM7 was 1.25g. A uniform aqueous resin dispersion composition containing no aggregate was obtained.

### Example 3

As an emulsifier, BAM8-N was used. Substantially the same procedure as in Example 1 was performed except that the aqueous solution of BAM6-N was replaced by an aqueous solution of BAM8-N such that the amount of BAM8 was 1.25g. A uniform aqueous resin dispersion composition containing no aggregate was obtained.

### Comparative Example 1

As an emulsifier, BAO5-N was used. Substantially the same procedure as in Example 1 was performed except that the aqueous solution of BAM6-N was replaced by an aqueous solution of BAO5-N such that the amount of BAO5 was 1.25g. During the polymerization reaction, formation of an aggregate occurred, so that the polymerization reaction was not completed.

### Comparative Example 2

As an emulsifier, ADEKALIA SOAP SE-10N (trade name; manufactured by Asahi Denka Kogyo K.K.) was used. Using 1.25g of ADEKALIA SOAP SE-10N, 200g of styrene was emulsified in 1 liter of water. As a polymerization initiator, 1.25g of potassium persulfate was added, and a polymerization reaction was conducted at 50°C for 4 hours. An aqueous resin dispersion composition containing an aggregate was obtained.

ADEKALIA SOAP SE-10N is a compound represented by chemical formula (2).

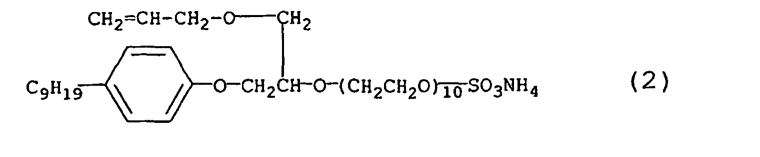

The reason that an aggregate was formed in the aqueous resin dispersion composition in Comparative Example 2 is presumed to be that the amount of the emulsifier used was too small. Specifically, according to the product catalogue of Asahi Denka Kogyo K.K., an appropriate amount of ADEKALIA SOAP SE-10N used in the emulsion polymerization is 2.5 to 10g per 100g of monomers. From this, it was found that the aqueous resin dispersion composition in each of Examples 1 to 3 in the present invention was obtained by a stable emulsion polymerization although the amount of the emulsifier used is smaller than the conventional amount of the emulsifier used.

### [3] Test of stability for solvent

As samples for the test of stability for solvent, aqueous resin dispersion compositions were prepared individually using an emulsifier in a large amount, as compared to the dispersions in the above Examples 1 to 3 and Comparative Examples 1 and 2.

### Examples 4 to 12

Using neutralized macromonomers BAM6-N in various concentrations, vinyl monomers were individually subjected to emulsion polymerization. The concentrations of macromonomers BAM6-N, in terms of BAM6 component, were individually set at 10g, 40g and 80g, per 1 liter of water. As vinyl monomers, styrene (St), methyl methacrylate (MMA) and butyl acrylate (BA) were used.

Using the predetermined amount of BAM6-N, 200g of each vinyl monomer was emulsified in 1 liter of water. 1.25g of potassium persulfate as a polymerization initiator was added, and then, a polymerization was conducted at 50°C for 4 hours, thereby obtaining an aqueous resin dispersion composition.

The aqueous resin dispersion composition was placed in a test tube, and isopropyl alcohol (IPA) or butyl cellosolve (Bce) in the same volume as that of the aqueous resin dispersion composition was added. The emulsion state of the aqueous resin dispersion composition was observed, and the results are summarized in Table 1. When the occurrence of an aggregate formation was not observed, the result is indicated by symbol "O". When the occurrence of an aggregate formation was observed, the result is indicated by symbol "x".

### Comparative Examples 3 to 11

Vinyl monomers were subjected to emulsion polymerization in substantially the same manner as mentioned above except that a nonreactive emulsifier BAO5-N was.used instead of a neutralized macromonomer BAM6-N. The observation results in Comparative Examples 3 to 11 are shown in Table 2.

**Table 1**

| Ex.No. | Vinyl monomer | BAM6 (g/l-water) | IPA | Bce |
|---|---|---|---|---|
| 4 | St | 10 | ○ | ○ |
| 5 | | 40 | ○ | ○ |
| 6 | | 80 | ○ | ○ |
| 7 | MAA | 10 | ○ | ○ |
| 8 | | 40 | ○ | ○ |
| 9 | | 80 | ○ | ○ |
| 10 | BA | 10 | ○ | ○ |
| 11 | | 40 | ○ | ○ |
| 12 | | 80 | ○ | ○ |

**Table 2**

| Comp. Ex.No. | Vinyl monomer | BAO5 (g/l-water) | IPA | Bce |
|---|---|---|---|---|
| 3 | St | 10 | × | × |
| 4 | | 40 | × | × |
| 5 | | 80 | × | × |
| 6 | MAA | 10 | × | × |
| 7 | | 40 | × | × |
| 8 | | 80 | × | × |
| 9 | BA | 10 | × | × |
| 10 | | 40 | × | × |
| 11 | | 80 | × | × |

In each of the aqueous resin dispersion compositions in Examples 4 to 12, even when a solvent was added and then the dispersion was further stirred, the emulsion state remained stable. In addition, after a lapse of 1 month, each aqueous resin dispersion composition remained in a stable emulsion state.

On the other hand, in each of the aqueous resin dispersion compositions in Comparative Examples 3 to 11, immediately after the addition of a solvent, an aggregate formation occurred. Further, also when the amount of the solvent added was reduced to 1/3, an aggregate formation similarly occurred.

### Example 13

Using 40g of EAM1-N, in terms of EAM1 component, 200g of styrene was emulsified in 1 liter of water. As a polymerization initiator, 1.25g of potassium persulfate was added, and a polymerization was conducted at 50°C for 5 hours, thereby obtaining an aqueous resin dispersion composition. Isopropyl alcohol and butyl cellosolve were each, in the same volume as that of the aqueous resin dispersion composition, added to the aqueous resin dispersion composition. No change in the emulsion state of the aqueous resin dispersion composition was recognized.

### Comparative Example 12

Using 40g of ADEKALIA SOAP SE-10N (trade name; manufactured by Asahi Denka Kogyo K.K.) as a reactive emulsifier, 200g of methyl methacrylate was emulsified in 1 liter of water. As a polymerization initiator, 1.25g of potassium persulfate was added, and a polymerization was conducted at 50°C for 4 hours, thereby obtaining an aqueous resin dispersion composition. The aqueous resin dispersion composition was placed in a test tube, and isopropyl alcohol, in the same volume as that of the aqueous resin dispersion composition, was added. Immediately after the addition of isopropyl alcohol, the emulsion state of the aqueous resin dispersion composition remained stable. However, with the lapse of time, the viscosity of the aqueous resin dispersion composition increased, and after 3 days, the aqueous resin dispersion composition changed to a substance in a gel form.

### Comparative Example 13

Substantially the same procedure as in Example 1 was performed except that AAM1-N in (6-2) was used instead of BAM6-N. Although the macromonomer concentration in Comparative Example 13 was the same as that in each of Examples 1 to 3, the speed of the polymerization reaction in Comparative Example 13 was extremely slow and a large amount of aggregate was formed. The reason for this is presumed to be that no hydrophobic monomer is contained in the copolymerized units in AAM1-N. That is, it is presumed that AAM1-N containing no hydrophobic monomer lacks the ability to allow a monomer to be dispersed and solubilized in water, and is unsatisfactory in the ability to adsorb onto a polymer particle.

By contrast, the macromonomer in each Example contains a hydrophobic monomer in its copolymerized units, and therefore, it exhibits excellent performance as an emulsifier.

### Example 14

57g of styrene and 13g of BA were mixed together to prepare a monomer solution. The prepared monomer solution was emulsified using 30g of BAM7-N, in terms of BAM7 component, to prepare a monomer-emulsion. A reactor vessel containing 233g of total amount of water, which includes water derived from BAM7-N, was maintained at 80°C, and 5% of the monomer-emulsion was added to the reactor vessel. 0.70g of APS (ammonium peroxodisulfate) was added to the reactor vessel. Then, the remaining monomer-emulsion was added to the reactor vessel over 2 hours. After completion of the addition, the reaction solution was allowed to stand at 80°C for 1 hour and 30 minutes. Then, the reaction solution was gradually cooled. When the temperature of the reaction solution reached 70°C, 0.05g of PBH (t-butyl hydroperoxide) was added, and after 5 minutes from the addition of PBH, 0.10g of Erbit N (trade name of sodium isoascorbate, manufactured by Fujisawa Pharmaceutical Co., Ltd.) was added, followed by cooling to 30°C to produce a resin dispersion composition. PBH/Erbit N serves as a redox initiator.

### Comparative Example 14

A resin dispersion composition was produced in substantially the same manner as in Example 14 except that BAO8-N was used instead of BAM7-N.

### Example 15

54g of styrene and 51g of BA were mixed together to prepare a monomer solution. 45g of CHAM5-N, in terms of CHAM5 component, and 352g of total amount of water, which includes water derived from CHAM5-N, was added to a reactor vessel. The reactor vessel was maintained at 80°C. 5% of the monomer solution was added to the reactor vessel. 1.05g of APS was added to the reactor vessel. Then, the remaining monomer solution was added to the reactor vessel over 2 hours. After the addition, the reaction solution was allowed to stand at 80°C for 1 hour and 30 minutes. Then, the reaction solution was gradually cooled. When the temperature of the reaction solution reached 70°C, 0.075g of PBH was added, and after 5 minutes from the addition of PBH, 0.15g of Erbit N was added, followed by cooling to 3.0°C, to produce a resin dispersion composition.

### Comparative Example 15

A resin dispersion composition was produced in substantially the same manner as in Example 15 except that the monomer solution was changed to a mixed solution comprising 33g of styrene and 73g of BA, and that CHAO1-N was used instead of CHAM5-N.

With respect to each of the resin dispersion compositions in Examples 14 and 15 and Comparative Examples 14 and 15, a grit (insoluble particle) and a nonvolatile content (NV) were measured. In addition, when IPA in the same volume as that of the resin dispersion composition was mixed into the resin dispersion composition, the state of the resultant mixture was observed (IPA test). When the emulsion state was kept stable, the result is indicated by the symbol "O". When the occurrence of an aggregate formation was observed, the result is indicated by the symbol "×". The results of respective items are shown in Table 3.

**Table 3**

| No. | NV(%) | grit | IPA test |
|---|---|---|---|
| Ex.14 | 30 | Trace amount | ○ |
| Ex.15 | 30 | Trace amount | ○ |
| Comp.Ex.14 | 30 | Trace amount | × |
| Comp.Ex.15 | 30 | Precipitated in a large amount | × |

### Example 16

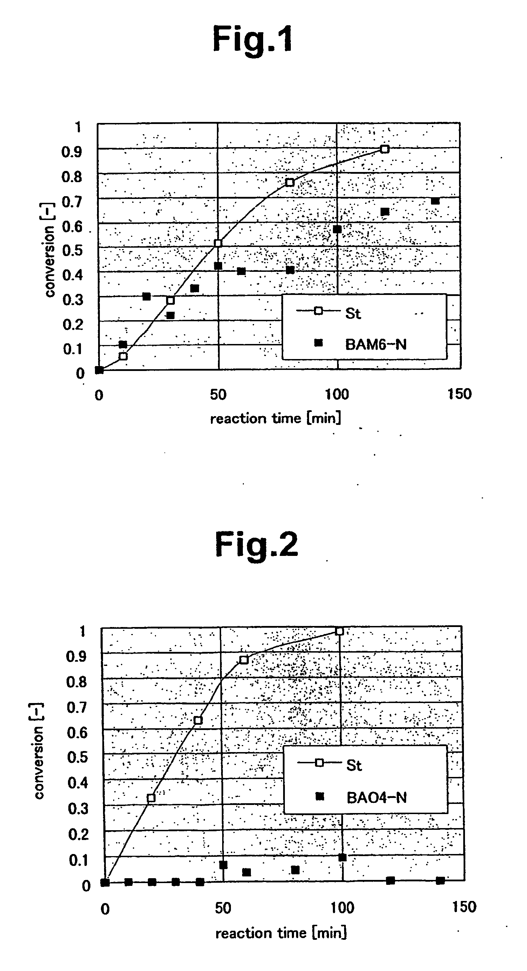

An emulsion polymerization was conducted in substantially the same manner as in Example 1 except that the amount of BAM6-N used was changed to 20g. During the polymerization reaction, the reaction liquid was sampled at appropriate time intervals, and the reaction ratios with respect to styrene and BAM6-N were measured. The determination of the reaction ratio was performed as follows. First, two samples were accurately weighed. To the first sample was added an aqueous hydroquinone solution, to completely terminate the polymerization reaction. The unreacted styrene and water were removed from the resultant mixture under a reduced pressure, followed by drying. The dry weight was measured and the reaction ratio of styrene was calculated. On the other hand, to the second sample was added a specified amount of tetrahydrofuran (THF), so that the produced polymer could be thoroughly dissolved to prepare a THF solution having a known reaction liquid concentration. Some insoluble substance, which probably has a bridged structure, was observed in the THF solution. The THF solution was filtered by using a 0.45 µm cartridge filter, and subjected to gel permeation chromatography (GPC) to measure the concentration of BAM6-N. The concentration of BAM6-N was calculated based on the peak height of the chart obtained by a refractive index detector. Using a calibration curve with respect to the concentration of BAM6-N, and the unreacted BAM6-N concentration (A) was determined from the peak height. Further, from the amounts of the raw materials used, the total BAM6-N concentration (B) in the THF solution was calculated. In accordance with the formula 1-(A/B), the reaction ratio of BAM6-N was calculated. The results are shown in Figure 1. The GPC measurement was performed under the following conditions.
Development solvent: THF, at a flow rate of 1 ml/min
Column: Shodex KF807/KF80M/KF802 (35°C)
Amount of sample injected: 100 µl

### Comparative Example 16

Substantially the same procedure as in Example 16 was performed except that BAO4-N was used instead of BAM6-N. No insoluble substance were observed in the THF solution. The reaction ratios with respect to styrene and BAO4-N were shown in Figure 2.

BAM6-N hardly undergoes homopolymerization, that is, it hardly forms a homopolymer. Therefore, Figure 1 shows that a copolymerization between BAM6-N and styrene proceeded. On the other hand, Figure 2 shows that BAO4-N is not copolymerized with styrene. From Example 16 and Comparative Example 16, it is presumed that, since the macromonomer in Example 16 has an emulsifying effect and is bound to the dispersion particle, the aqueous resin dispersion composition produced using the macromonomer in Example 16 remains in a stable dispersion state even when a solvent is mixed into the dispersion.

The aqueous resin dispersion composition of Example 16 has advanced dispersion stability and has bridged structure therein. This enhances the water resistance and the durability of the product when the dispersion composition is used as painting agents, coating materials, adhesives and the like.

In the present invention, an aqueous resin dispersion composition is produced by subjecting a vinyl monomer to emulsion polymerization using the neutralization product of a macromonomer having an ethylenically unsaturated bond wherein the macromonomer is produced by radical polymerization at a reaction temperature of 180 to 350°C. The producing method according to the present invention produces an aqueous resin dispersion composition having advanced polymerization stability. Therefore, the dispersion composition is kept in a stable emulsion state. Particularly, even when a solvent is added to the aqueous resin dispersion composition, the emulsion state of the aqueous resin dispersion composition remains stable, and an aggregation of the resin does not occur.

## Claims

1. A method for producing an aqueous resin dispersion composition comprising:
preparing a monomer mixture containing a first monomer having a carboxyl group and a second monomer having a hydrophobic group, the monomer mixture containing the first monomer in a proportion of 10 to 75% by mole;
forming a macromonomer by radical polymerizing the monomer mixture at a temperature of from 180 to 350°C, wherein the macromonomer has an ethylenically unsaturated bond at an end, represented by the following formula (1) and having a number average molecular weight of 500 to 5000, 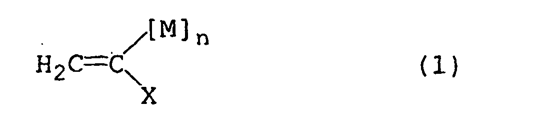 where X represents a polar group, M represents a monomer unit, and the character n stands for a natural number representing the degree of polymerization;
neutralizing the macromonomer to obtain a neutralized macromonomer having an ethylenically unsaturated bond at least at one end thereof; and
emulsion polymerizing at least one vinyl monomer in an aqueous solvent using the neutralized macromonomer as an emulsifier.

2. The method according to claim 1, wherein the emulsion polymerizing includes:
preparing an aqueous solution of the neutralized macromonomer; and
adding at least one vinyl monomer continuously or intermittently to the aqueous solution of the neutralized macromonomer.

3. The method according to claim 1, wherein the emulsion polymerizing includes:
preparing a dispersion solution including the neutralized macromonomer, at least one vinyl monomer and water; and
adding the dispersion solution continuously or intermittently to a reactor vessel charged with water.

4. The method according to claim 1, wherein the emulsion polymerizing includes:
starting emulsion polymerization reaction by charging the neutralized macromonomer, at least one vinyl monomer and water to a reactor vessel.

5. The method according to claim 1, wherein the emulsion polymerizing includes:
preparing a neutralized macromonomer solution;
placing water and a part of the neutralized macromonomer solution in a reactor vessel; and
adding a vinyl monomer and the rest of the neutralized macromonomer solution continuously or intermittently to the reactor vessel.

6. The method according to any one of claims 1 to 5, wherein a base selected from the group consisting of ammonia and a low boiling-point amine compound having a boiling point of 140°C or lower is used in the neutralizing.

7. The method according to any one of claims 1 to 5, wherein the neutralized macromonomer has a number average molecular weight of 500 to 5000.

8. The method according to any one of claims 1 to 5, wherein the amount of the neutralized macromonomer used in the emulsion polymerizing is 0.5 to 80 parts by weight, per 100 parts by weight of the vinyl monomer.

9. The method according to any one of claims 1 to 5, wherein the first monomer is at least one compound selected from the group consisting of acrylic acid, methacrylic acid, crotonic acid, vinylacetic acid, acryloxypropionic acid, maleic acid, fumaric acid, mesaconic acid, citraconic acid, itaconic acid, and maleic anhydride.

10. The method according to any one of claims 1 to 5, wherein the second monomer is at least one compound selected from the group consisting of monomers having solubility to water of 2 wt% or less at 20°C.

11. The method according to any one of claims 1 to 5, wherein the macromonomer has ethylenically unsaturated bonds at least at two ends.

## Patentansprüche

1. Verfahren zur Herstellung einer wässrigen Harzdispersionszusammensetzung, umfassend:
Herstellen eines Monomerengemisches aus einem ersten Monomer mit einer Carboxylgruppe und einem zweiten Monomer mit einer hydrophoben Gruppe, wobei das Monomerengemisch das erste Monomer in einem molaren Anteil von 10 bis 75% enthält;
Bilden eines Makromonomers durch radikalisches Polymerisieren des Monomerengemisches bei einer Temperatur von 180 bis 350°C, worin das Makromonomer eine ethylenisch ungesättigte Bindung an einem Ende aufweist, dargestellt durch die folgende Formel (1), und ein Zahlenmittel der Molmasse von 500 bis 5000 hat, 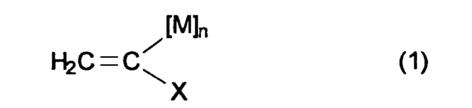 worin X eine polare Gruppe darstellt, M eine Monomereinheit darstellt, und der Buchstabe n für eine natürliche Zahl steht, die den Polymerisationsgrad angibt;
Neutralisieren des Makromonomers, um ein neutralisiertes Makromonomer mit einer ethylenisch ungesättigten Bindung an mindestens einem seiner Enden zu erhalten; und
Emulsionspolymerisieren mindestens eines Vinylmonomers in einem wässrigen Lösungsmittel unter Verwendung des neutralisierten Makromonomers als Emulgator.

2. Verfahren nach Anspruch 1, worin das Emulsionspolymerisieren umfasst:
Herstellen einer wässrigen Lösung des neutralisierten Makromonomers; und
kontinuierliches oder diskontinuierliches Zugeben von mindestens einem Vinylmonomer zur wässrigen Lösung des neutralisierten Makromonomers.

3. Verfahren nach Anspruch 1, worin das Emulsionspolymerisieren umfasst:
Herstellen einer Dispersionslösung, die das neutralisierte Makromonomer, mindestens ein Vinylpolymer und Wasser umfasst; und
kontinuierliches oder diskontinuierliches Zugeben der Dispersionslösung in einen mit Wasser beschickten Reaktorbehälter.

4. Verfahren nach Anspruch 1, worin das Emulsionspolymerisieren umfasst:
Starten der Emulsionspolymerisationsreaktion durch Einbringen des neutralisierten Makromonomers, des mindestens einen Vinylmonomers und Wasser in einen Reaktorbehälter.

5. Verfahren nach Anspruch 1, worin das Emulsionspolymerisieren umfasst:
Herstellen einer neutralisierten Makromonomerlösung;
Einbringen von Wasser und eines Teils der neutralisierten Makromonomerlösung in einen Reaktorbehälter; und
kontinuierliches oder diskontinuierliches Zugeben eines Vinylmonomers und der restlichen neutralisierten Makromonomerlösung zum Reaktorbehälter.

6. Verfahren nach einem der Ansprüche 1 bis 5, worin beim Neutralisieren eine Base verwendet wird, die aus der Gruppe ausgewählt ist, die aus Ammoniak und einer niedrig siedenden Aminverbindung mit einem Siedepunkt von 140°C oder weniger ausgewählt ist.

7. Verfahren nach einem der Ansprüche 1 bis 5, worin das neutralisierte Makromonomer ein Zahlenmittel der Molmasse von 500 bis 5000 hat.

8. Verfahren nach einem der Ansprüche 1 bis 5, worin die Menge des neutralisierten Makromonomers, das beim Emulsionspolymerisieren verwendet wird, 0,5 bis 80 Gewichtsteile auf 100 Gewichtsteile des Vinylmonomers beträgt.

9. Verfahren nach einem der Ansprüche 1 bis 5, worin das erste Monomer mindestens eine Verbindung ist, die aus der Gruppe ausgewählt ist, die aus Acrylsäure, Methacrylsäure, Crotonsäure, Vinylessigsäure, Acryloxypropionsäure, Maleinsäure, Fumarsäure, Mesaconsäure, Citraconsäure, Itaconsäure und Maleinsäureanhydrid besteht.

10. Verfahren nach einem der Ansprüche 1 bis 5, worin das zweite Monomer mindestens eine Verbindung ist, die aus der Gruppe ausgewählt ist, die aus Monomeren mit einer Wasserlöslichkeit von 2 Gew.-% oder weniger bei 20°C besteht.

11. Verfahren nach einem der Ansprüche 1 bis 5, worin das Makromonomer ethylenisch ungesättigte Bindungen an mindestens zwei Enden hat.

## Revendications

1. Procédé de production d'une composition de dispersion aqueuse de résine comprenant :
la préparation d'un mélange de monomères comprenant un premier monomère ayant un groupe carboxyle et un second monomère ayant un groupe hydrophobe, le mélange de monomères contenant le premier monomère en une proportion de 10 à 75 % en mole ;
la formation d'un macromonomère par polymérisation radicalaire du mélange de monomères à une température de 180 à 350 °C, dans lequel le macromonomère a une liaison éthyléniquement insaturée au niveau d'une extrémité, représentée par la formule (1) suivante et ayant une masse moléculaire moyenne en nombre de 500 à 5 000, 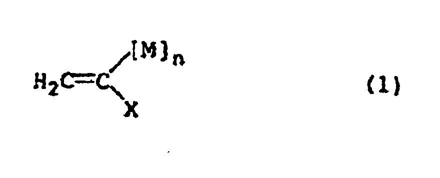 où X représente un groupe polaire, M représente un motif monomère et le caractère n représente un nombre naturel représentant le degré de polymérisation ;
la neutralisation du macromonomère pour obtenir un macromonomère neutralisé ayant une liaison éthyléniquement insaturée au moins au niveau d'une extrémité de celui-ci ; et
la polymérisation en émulsion d'au moins un monomère de vinyle dans un solvant aqueux en utilisant le macromonomère neutralisé en tant qu'émulsifiant.

2. Procédé selon la revendication 1, dans lequel la polymérisation en émulsion comprend :
la préparation d'une solution aqueuse du macromonomère neutralisé ; et
l'addition d'au moins un monomère de vinyle en continu ou de manière intermittente à la solution aqueuse du macromonomère neutralisé.

3. Procédé selon la revendication 1, dans lequel la polymérisation en émulsion comprend :
la préparation d'une solution de dispersion comprenant le macromonomère neutralisé, au moins un monomère de vinyle et de l'eau ; et
l'addition de la solution de dispersion en continu ou de manière intermittente à une cuve de réacteur chargée d'eau.

4. Procédé selon la revendication 1, dans lequel la polymérisation en émulsion comprend :
le démarrage d'une réaction de polymérisation en émulsion en chargeant le macromonomère neutralisé, au moins un monomère de vinyle et de l'eau dans une cuve de réacteur.

5. Procédé selon la revendication 1, dans lequel la polymérisation en émulsion comprend :
la préparation d'une solution de macromonomère neutralisé ;
le placement d'eau et d'une partie de la solution de macromonomère neutralisé dans une cuve de réacteur ; et
l'addition d'un monomère de vinyle et du reste de la solution de macromonomère neutralisé en continu ou de manière intermittente dans la cuve de réacteur.

6. Procédé selon l'une quelconque des revendications 1 à 5, dans lequel une base choisie dans le groupe constitué par l'ammoniac et un composé amine à faible point d'ébullition ayant un point d'ébullition de 140 °C ou inférieur est utilisée dans la neutralisation.

7. Procédé selon l'une quelconque des revendications 1 à 5, dans lequel le macromonomère neutralisé a une masse moléculaire moyenne en nombre de 500 à 5 000.

8. Procédé selon l'une quelconque des revendications 1 à 5, dans lequel la quantité du macromonomère neutralisé utilisée dans la polymérisation en émulsion est de 0,5 à 80 parties en poids, pour 100 parties en poids du monomère de vinyle.

9. Procédé selon l'une quelconque des revendications 1 à 5, dans lequel le premier monomère est au moins un composé choisi dans le groupe constitué par l'acide acrylique, l'acide méthacrylique, l'acide crotonique, l'acide vinylacétique, l'acide acryloxypropionique, l'acide maléique, l'acide fumarique, l'acide mésaconique, l'acide citraconique, l'acide itaconique et l'anhydride maléique.

10. Procédé selon l'une quelconque des revendications 1 à 5, dans lequel le second monomère est au moins un composé choisi dans le groupe constitué par les monomères ayant une solubilité dans l'eau de 2 % en poids ou moins à 20 °C.

11. Procédé selon l'une quelconque des revendications 1 à 5, dans lequel le macromonomère a des liaisons éthyléniquement insaturées au moins au niveau de deux extrémités.
